# EUROPÄISCHE PATENTSCHRIFT

(11) **EP 3 084 466 B1**
(45) Veröffentlichungstag und Bekanntmachung des Hinweises auf die Patenterteilung: **30.09.2020**
(21) Anmeldenummer: 14802633.9
(22) Anmeldetag: 21.11.2014
(51) Int. Cl.: G01S 13/931, G01S 15/86, G01S 13/86, B60W 30/06, G01S 15/931

(54) **VERFAHREN ZUM DETEKTIEREN EINER AUF EINEM BODEN AUFGEBRACHTEN MARKIERUNG, FAHRERASSISTENZEINRICHTUNG UND KRAFTFAHRZEUG**
METHOD FOR DETECTING A MARK APPLIED TO AN UNDERLYING SURFACE, DRIVER ASSISTANCE DEVICE AND MOTOR VEHICLE
PROCÉDÉ DE DÉTECTION D'UN MARQUAGE PLACÉ SUR UNE ROUTE, DISPOSITIF D'ASSISTANCE AU CONDUCTEUR ET VÉHICULE AUTOMOBILE

(30) Priorität: 17.12.2013 DE 102013021326
(43) Veröffentlichungstag der Anmeldung: 26.10.2016
(73) Patentinhaber: Valeo Schalter und Sensoren GmbH, 74321 Bietigheim-Bissingen (DE)
(72) Erfinder: HEIMBERGER, Markus, 74321 Bietigheim-Bissingen (DE)
(74) Vertreter: Pothmann, Karsten
(86) Internationale Anmeldenummer: PCT/EP2014/075237
(87) Internationale Veröffentlichungsnummer: WO 2015/090843

(56) Entgegenhaltungen:
- WO-A1-2011/058822
- DE-A1-102005 015 088
- DE-A1-102007 047 362
- DE-A1-102009 000 401

## Beschreibung

Die Erfindung betrifft ein Verfahren zum Detektieren einer auf einem Boden aufgebrachten Markierung durch eine Fahrerassistenzeinrichtung eines Kraftfahrzeugs. Die Erfindung betrifft außerdem eine Fahrerassistenzeinrichtung, welche zum Durchführen eines solchen Verfahrens ausgebildet ist, sowie ein Kraftfahrzeug mit einer solchen Fahrerassistenzeinrichtung.

Das Interesse richtet sich vorliegend insbesondere auf Parkassistenzsysteme, welche zum Durchführen von Parkvorgängen eines Kraftfahrzeugs ausgebildet sind. Diesbezüglich wird zwischen so genannten semi-autonomen (halbautomatischen) Systemen einerseits und vollautomatischen Systemen andererseits unterschieden. Allen Systemen ist dabei gemein, dass eine potentielle Parklücke detektiert und eine Abmessung der Parklücke erfasst und dann mit einer abgelegten Mindestabmessung verglichen wird. Ist die erfasste Abmessung der detektierten Parklücke mindestens gleich der Mindestabmessung, so wird dem Fahrer die Möglichkeit des Einparkvorgangs signalisiert. Das System ermittelt dann die aktuelle relative Position des Kraftfahrzeugs bezüglich der Parklücke und berechnet eine Parkbahn (Parktrajektorie), entlang welcher das Kraftfahrzeug in die Parklücke kollisionsfrei eingeparkt werden kann. Bei semi-autonomen Parkassistenzsystemen wird es dem Fahrer zugeteilt, Gas zu geben und zu bremsen. Bei semi-autonomen Parkassistenzsystemen wird die Längsführung des Kraftfahrzeugs also durch den Fahrer selbst gesteuert, während die Steuerung der Querführung durch das Parkassistenzsystem selbst erfolgt, indem entsprechende Steuersignale an eine Lenkvorrichtung des Kraftfahrzeugs abgegeben werden. Bei vollautomatischen Parkassistenzsystemen hingegen wird sowohl die Längsführung als auch die Querführung automatisch durch das Parkassistenzsystem durchgeführt, indem entsprechende Steuersignale sowohl an die Lenkvorrichtung als auch an einen Antriebsstrang und ein Bremssystem des Kraftfahrzeugs abgegeben werden. Bei vollautomatischen Systemen braucht der Fahrer den Einparkvorgang lediglich freizugeben und kann diesen auch jederzeit unterbrechen.

Zur Erfassung von Parklücken werden üblicherweise Ultraschallsensoren eingesetzt, die im vorderen Bereich des Kraftfahrzeugs an den jeweiligen Seitenflanken angebracht sind. Während einer Vorbeifahrt des Kraftfahrzeugs an einer potentiellen Parklücke misst der Ultraschallsensor fortlaufend den seitlichen Abstand des Kraftfahrzeugs zu fahrzeugexternen Hindernissen bzw. Objekten. Anhand des Verlaufs der Messwerte des Ultraschallsensors sowie unter Berücksichtigung der zurückgelegten Wegstrecke kann dann die Abmessung der Parklücke in Längsrichtung des Kraftfahrzeugs bzw. in Längsrichtung der Fahrbahn sowie die relative Position der Parklücke bezüglich des Kraftfahrzeugs bestimmt werden. Dies gilt sowohl für Längsparklücken, deren Längsachse im Wesentlichen parallel zur Fahrbahn orientiert ist, als auch für Querparklücken, deren Längsachse senkrecht oder in einem spitzen Winkel zur Fahrbahn verläuft. Ein derartiges Detektionsverfahren ist beispielsweise aus dem Dokument EP 0 305 907 B1 bekannt.

Es ist außerdem bereits Stand der Technik, zur Detektion von Parklücken sowohl die Sensordaten von Ultraschallsensoren als auch Bilddaten einer Kamera zu verwenden und miteinander zu kombinieren. Eine derartige Sensorfusion ist beispielsweise aus dem Dokument DE 10 2007 047 362 A1 bekannt.

Ein Verfahren zur Bereitstellung einer Bilddarstellung auf einem Display unter Verwendung von Bilddaten einer Kamera sowie von Sensordaten mehrerer Ultraschallsensoren ist aus dem Dokument DE 11 2010 005 572 T5 bekannt.

Weiterhin beschreibt die DE 10 2005 015088 A1 ein Fahrzeugumgebungsüberwachungssystem mit einer Hinderniserfassungseinheit, einer Hinweiseinheit zum Hinweisen auf das Vorliegen eines Hindernisses, einer Steuerungseinheit zum Steuern der Hinweiseinheit so, dass sie auf das Vorliegen eines Hindernisses hinweist, wenn das Vorliegen des Hindernisses durch die Hinderniserfassungseinheit erfasst wird, und einer Bildgebungseinheit zum Einfangen eines Bildes der Umgebung des Fahrzeugs, wobei dann, wenn der erfasste Abstand von dem Fahrzeug zu dem Hindernis, der durch die Hinderniserfassungseinheit erfasst wird, gleich oder größer als ein vorgegebener Abstand ist, die Steuerungseinheit einen Bildverarbeitungsvorgang an einem hinsichtlich des Betrachtungspunkts geänderten Bildes, das durch Ändern des Betrachtungspunkts des durch die Bildgebungseinheit eingefangenen Bildes erzeugt wird, durchführt. Die WO 2011/058822 A1 zeigt ein weiteres Fahrzeugüberwachungssystem.

Die DE 10 2009 000401 A1 zeigt Verfahren zur Vermeidung einer Kollision zwischen einem Fahrzeug und einem Objekt, umfassend: Erfassen zumindest einer ersten Objektinformation des Objektes relativ zu dem Fahrzeug mit Hilfe eines Ultraschallmesssystems, Erfassen zumindest einer zweiten Objektinformation des Objektes mit Hilfe eines optischen Messsystems, und Korrelieren der ersten und der zweiten Objektinformation.

Bei heutigen Parkassistenzsystemen, welche zur Detektion von Parklücken anhand von Bilddaten einer Kamera sowie anhand von Sensordaten eines Ultraschallsensors ausgebildet sind, erfolgt die Detektion einer Parklücke üblicherweise zunächst mittels eines Ultraschallsensors. Wird eine Parklücke anhand von Sensordaten des Ultraschallsensors detektiert, werden zusätzlich noch die Bilddaten ausgewertet und die ursprünglich detektierte Parklücke gegebenenfalls korrigiert. Eine solche Korrektur ist beispielsweise dann notwendig, wenn ein die Parklücke begrenzendes Fahrzeug schräg geparkt ist, d.h. unter einem spitzen Winkel bezüglich der Längsrichtung der Parklücke. Um in solchen Fällen verhindern zu können, dass auch das Ego-Kraftfahrzeug durch das Parkassistenzsystem schräg in die detektierte Parklücke eingeparkt wird, ist die Erkennung der Parklückenmarkierungen mittels Kamera erforderlich. Darüber hinaus können anhand von Bilddaten auch Parklücken detektiert werden, neben denen keine Fahrzeuge geparkt sind und welche somit ausschließlich durch entsprechende Parklückenmarkierungen auf dem Boden begrenzt sind. Die Linienerkennung funktioniert insbesondere dann besonders zuverlässig, wenn die Parklücke durch T-förmige Markierungen begrenzt ist.

Einfache Parklückenmarkierungen, welche nicht die T-Form aufweisen, können hingegen lediglich unzureichend detektiert werden. Solche Markierungen können leicht mit Schatten oder mit Zierleisten anderer Fahrzeuge verwechselt werden.

Es ist Aufgabe der Erfindung, eine Lösung aufzuzeigen, wie bei einem Verfahren der eingangs genannten Gattung auf einem Boden aufgebrachte Markierungen durch die Fahrerassistenzeinrichtung besonders zuverlässig detektiert werden können.

Diese Aufgabe wird erfindungsgemäß durch ein Verfahren, durch eine Fahrerassistenzeinrichtung sowie durch ein Kraftfahrzeug mit den Merkmalen gemäß den jeweiligen unabhängigen Patentansprüchen gelöst. Vorteilhafte Ausführungen der Erfindung sind Gegenstand der abhängigen Patentansprüche, der Beschreibung und der Figuren.

Ein erfindungsgemäßes Verfahren dient zum Detektieren einer auf einem Boden aufgebrachten Markierung durch eine Fahrerassistenzeinrichtung eines Kraftfahrzeugs, das sich auf dem Boden befindet, etwa auf einer Fahrbahn. Mittels eines bildgebenden Sensors der Fahrerassistenzeinrichtung wird ein zweidimensionales Abbild einer Fahrzeugumgebung bereitgestellt, und es wird eine potentielle Markierung anhand des zweidimensionalen Abbilds identifiziert. Es wird eine Abstandsmessung mittels eines von dem bildgebenden Sensor separaten Abstandssensors der Fahrerassistenzeinrichtung durchgeführt. Abhängig von einem Ergebnis der Abstandsmessung wird dann bestimmt, ob die anhand des Abbilds detektierte potentielle Markierung die auf dem Boden aufgebrachte Markierung oder aber eine Markierung eines auf dem Boden stehenden Objekts ist.

Erfindungsgemäß erfolgt demnach eine Plausibilisierung der anhand des zweidimensionalen Abbilds identifizierten potentiellen Markierung anhand von Sensordaten, welche durch einen Abstandssensor bereitgestellt werden, welcher auch dreidimensionale Objekte detektieren kann. Da das zweidimensionale Abbild keine Tiefeninformationen enthält und die Detektion der potentiellen Markierung durch eine Bodenprojektion des Abbilds erfolgt, kann alleine anhand des zweidimensionalen Abbilds nicht festgestellt werden, ob die potentielle Markierung tatsächlich eine auf dem Boden aufgebrachte Markierung oder aber eine über dem Boden befindliche Markierung eines dreidimensionalen Objekts ist, etwa eine länglich ausgeführte Zierleiste eines Fahrzeugs oder dergleichen. Wird nun die Abstandsmessung mittels des Abstandssensors durchgeführt, so kann die potentielle Markierung plausibilisiert werden, und es kann zuverlässig festgestellt werden, ob es sich bei der potentiellen Markierung tatsächlich um eine auf dem Boden aufgebrachte Markierung oder eine Markierung des Objekts handelt. Die Detektion von Bodenmarkierungen kann somit besonders zuverlässig erfolgen.

Als Markierung wird bei dem Verfahren vorzugsweise eine Längsmarkierung detektiert, d.h. eine längliche, linienhafte Markierung. Beispielsweise kann es sich bei einer Markierung um eine Parklückenmarkierung handeln, durch welche eine Parklücke begrenzt ist. Ergänzend oder alternativ kann es sich bei der Markierung auch um eine Straßenlängsmarkierung handeln, durch welche eine Fahrspur einer Fahrbahn definiert wird.

Durch die Fahrerassistenzeinrichtung wird eine Position der potentiellen Markierung relativ zum Kraftfahrzeug anhand des zweidimensionalen Abbilds bestimmt und zur Plausibilisierung der potentiellen Markierung mit dem Ergebnis der Abstandsmessung verglichen. Die Bestimmung der relativen Position der potentiellen Markierung erfolgt vorzugsweise durch eine Bodenprojektion der potentiellen Markierung auf den Boden, und zwar entlang einer den bildgebenden Sensor mit der potentiellen Markierung verbindenden Geraden. Da das zweidimensionale Abbild keine Tiefeninformationen enthält, kann die relative Position der potentiellen Markierung nur bestimmt werden, indem diese Markierung auf eine Ebene des Bodens projiziert wird. Ist diese relative Position der potentiellen Markierung bekannt, kann diese mit dem Ergebnis der Abstandsmessung verglichen und somit plausibilisiert werden. Es lassen sich somit Fehler bei der Detektion von Markierungen ausschließen.

In diesem Zusammenhang kann insbesondere vorgesehen sein, dass, falls bei der Abstandsmessung ein Abstand gemessen wird, welcher kleiner als ein Abstand der potentiellen Markierung von dem Kraftfahrzeug ist, die potentielle Markierung als die Markierung des Objekts und somit keine echte Bodenmarkierung interpretiert wird. Da, um anhand des zweidimensionalen Abbilds die Position der potentiellen Markierung bestimmen zu können, die Markierung auf die Bodenebene projiziert wird, befindet sich diese Markierung möglicherweise in einem größeren Abstand von dem Kraftfahrzeug als die durch den Abstandssensor gemessene Entfernung. Da es nicht plausibel ist, dass eine tatsächliche Bodenmarkierung hinter einem dreidimensionalen Objekt detektiert werden kann, muss dies eine Fehldetektion sein. Wird also ein Objekt vor der potentiellen Markierung detektiert, wird diese potentielle Markierung als eine über dem Boden liegende Linie interpretiert und kann daher verworfen werden.

Falls bei der Abstandsmessung hingegen kein Objekt detektiert wird oder ein Abstand gemessen wird, welcher größer als ein Abstand der potentiellen Markierung von dem Kraftfahrzeug ist, wird die potentielle Markierung vorzugsweise als die auf dem Boden aufgebrachte und somit eine echte Markierung interpretiert. Hier wird die Detektion der Bodenmarkierung bestätigt, sodass diese beispielsweise als eine Parklückenmarkierung oder aber eine Straßenlängsmarkierung interpretiert werden kann. Die Detektion ist somit plausibel.

Hinsichtlich der Erfassung des zweidimensionalen Abbilds können verschiedenste Ausführungsformen vorgesehen sein: Zum einen kann zur Bereitstellung von zweidimensionalen Bilddaten eine Kamera, insbesondere eine farbempfindliche Kamera, eingesetzt werden, wie beispielsweise eine CMOS-Kamera oder eine CCD-Kamera. Eine solche Kamera stellt eine Bilderfassungseinrichtung dar, welche Licht im sichtbaren Spektralbereich detektieren und somit Bilder der Fahrzeugumgebung bereitstellen kann. Zwar können anhand von Bilddaten einer Kamera auf dem Boden aufgebrachte Markierungen detektiert werden, jedoch enthalten die Bilddaten eines einzelnen Bilds (Frame) keine Tiefeninformationen. Aus diesem Grund kann die Position einer detektierten Markierung lediglich durch die Projektion auf die Bodenebene ermittelt werden. Gerade beim Einsatz einer derartigen Kamera erweist sich die erfindungsgemäße Plausibilisierung mittels eines Abstandssensors als besonders vorteilhaft.

Ergänzend oder alternativ kann als bildgebender Sensor auch ein Laserscanner eingesetzt werden.

Die Abstandsmessung erfolgt vorzugsweise mithilfe eines Ultraschallsensors. Ergänzend oder alternativ kann als Abstandssensor auch ein Laserscanner und/oder ein Radarsensor und/oder eine dreidimensionale Bilddaten bereitstellende Kamera eingesetzt werden. Eine solche Kamera kann zum Beispiel eine Stereo-Kamera und/oder eine Kamera sein, bei welcher dreidimensionale Bildinformationen anhand von mehreren Bildern bereitgestellt werden, welche während der Fahrt des Kraftfahrzeugs erfasst werden. Hier kann beispielsweise das SLAM-Verfahren (simultaneous localisation and mapping) eingesetzt werden.

Wie bereits ausgeführt, kann die Fahrerassistenzeinrichtung als Parkassistenzsystem ausgebildet sein, mittels welchem Parklücken detektiert und das Kraftfahrzeug zumindest semi-autonom eingeparkt wird. Als Markierung kann das Parkassistenzsystem dann eine Parklückenmarkierung detektieren, durch welche eine Parklücke begrenzt ist. Anhand der detektierten Parklückenmarkierung kann das System dann eine Parklücke detektieren und/oder eine Zielposition des Kraftfahrzeugs in einer Parklücke festlegen. Somit können zumindest semi-autonome Parkvorgänge besonders zuverlässig durchgeführt werden, da die genaue Ausrichtung der Parklücke anhand der detektierten Parklückenmarkierung ermittelt werden kann.

Ergänzend oder alternativ kann die Fahrerassistenzeinrichtung auch zur Erkennung einer Fahrspur einer Fahrbahn ausgebildet sein. Als Markierung wird dann eine Straßenlängsmarkierung detektiert. In dieser Ausführungsform kann die Fahrerassistenzeinrichtung beispielsweise als Spurhaltesystem ausgebildet sein.

Die Erfindung betrifft außerdem eine Fahrerassistenzeinrichtung für ein Kraftfahrzeug, welche zum Detektieren einer auf einem Boden aufgebrachten Markierung ausgebildet ist und einen bildgebenden Sensor zum Bereitstellen eines zweidimensionalen Abbilds, eine Auswerteeinrichtung zum Identifizieren einer potentiellen Markierung anhand des zweidimensionalen Abbilds sowie einen Abstandssensor zum Durchführen einer Abstandsmessung umfasst. Die Auswerteeinrichtung ist dazu ausgelegt, abhängig von einem Ergebnis der Abstandsmessung zu bestimmen, ob die potentielle Markierung die auf dem Boden aufgebrachte Markierung oder eine Markierung eines auf dem Boden stehenden Objekts ist. Die Fahrerassistenzeinrichtung ist dazu ausgelegt ist, eine Position der potentiellen Markierung relativ zum Kraftfahrzeug anhand des zweidimensionalen Abbilds durch eine Bodenprojektion der potentiellen Markierung auf den Boden zu bestimmen und zur Plausibilisierung der potentiellen Markierung mit dem Ergebnis der Abstandsmessung zu verglichen.

Ein erfindungsgemäßes Kraftfahrzeug, insbesondere ein Personenkraftwagen, umfasst eine erfindungsgemäße Fahrerassistenzeinrichtung.

Die mit Bezug auf das erfindungsgemäße Verfahren vorgestellten bevorzugten Ausführungsformen und deren Vorteile gelten entsprechend für die erfindungsgemäße Fahrerassistenzeinrichtung sowie für das erfindungsgemäße Kraftfahrzeug.

Weitere Merkmale der Erfindung ergeben sich aus den Ansprüchen, den Figuren und der Figurenbeschreibung. Alle vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder aber in Alleinstellung verwendbar.

Die Erfindung wird nun anhand eines bevorzugten Ausführungsbeispiels sowie unter Bezugnahme auf die beigefügten Zeichnungen näher erläutert.

Es zeigen:
- Fig. 1: in schematischer Darstellung ein Kraftfahrzeug mit einer Fahrerassistenzeinrichtung gemäß einer Ausführungsform der Erfindung, welches sich neben einer Parklücke befindet;
- Fig. 2: ein beispielhaftes Abbild der Parklücke;
- Fig. 3: in schematischer Darstellung einen Bereich des Kraftfahrzeugs, wobei ein Verfahren gemäß einer Ausführungsform der Erfindung näher erläutert wird; und
- Fig. 4: in schematischer Darstellung ein Abbild zur Erläuterung des Verfahrens.

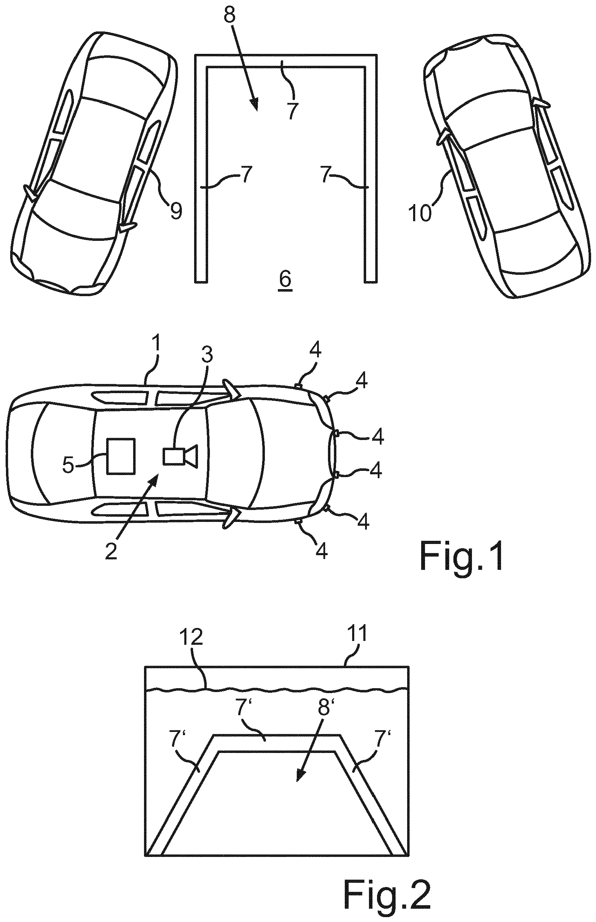

Ein in Fig. 1 dargestelltes Kraftfahrzeug 1 ist beispielsweise ein Personenkraftwagen mit einer Fahrerassistenzeinrichtung 2 gemäß einer Ausführungsform der Erfindung. Die Fahrerassistenzeinrichtung 2 ist im Ausführungsbeispiel als Parkassistenzsystem ausgebildet, welches zur Detektion von Parklücken sowie zum Durchführen von semiautomatischen oder vollautomatischen Parkvorgängen ausgebildet ist. Das Parkassistenzsystem kann eine geeignete Parkbahn automatisch berechnen, entlang welcher das Kraftfahrzeug 1 dann automatisch oder semi-autonom in eine zuvor detektierte Parklücke geführt werden kann. Bei vollautomatischen Parkassistenzsystemen übernimmt die Fahrerassistenzeinrichtung 2 sowohl die Längsführung als auch die Querführung des Kraftfahrzeugs 1, während bei semiautomatischen bzw. halbautonomen Systemen die Fahrerassistenzeinrichtung 2 lediglich die Querführung und somit die Lenkung automatisch steuert, während der Fahrer selbst Gas geben und bremsen muss.

Die Fahrerassistenzeinrichtung 2 kann ergänzend oder alternativ auch als ein Spurhaltesystem ausgebildet sein.

Die Fahrerassistenzeinrichtung 2 umfasst einen bildgebenden Sensor 3, welcher im Ausführungsbeispiel als eine Kamera ausgebildet ist. Zur Fahrerassistenzeinrichtung 2 gehören auch eine Vielzahl von Abstandssensoren 4, welche beispielsweise Ultraschallsensoren sind. Die Abstandssensoren 4 können zum Beispiel am vorderen Stoßfänger des Kraftfahrzeugs 1 verteilt angeordnet sein. Entsprechende Abstandssensoren 4 können auch am hinteren Stoßfänger angeordnet sein. Zumindest ein Abstandssensor 4 ist an der jeweiligen Seitenflanke des Kraftfahrzeugs 1 angeordnet.

Die Fahrerassistenzeinrichtung 2 umfasst des Weiteren eine elektronische Auswerteeinrichtung 5, welche zur Detektion von auf einem Boden 6 - hier einer Fahrbahn - aufgebrachten Markierungen 7 ausgebildet ist. Werden die Markierungen 7 detektiert, kann anhand der detektierten Markierungen 7 eine Parklücke 8 detektiert und/oder eine Zielposition des Kraftfahrzeugs 1 innerhalb der Parklücke 8 festgelegt werden. Die Detektion der Markierungen 7 ermöglicht die Bestimmung der Orientierung bzw. Ausrichtung der Parklücke 8 in Situationen, in denen die Parklücke 8 seitlich durch schräg geparkte Fahrzeuge 9, 10 begrenzt ist. Alleine mithilfe der Abstandssensoren 4 ist eine präzise Erfassung der Parklückenausrichtung in derartigen Fällen nicht oder nur beschränkt möglich.

Zur Detektion der Markierungen 7 werden Bilddaten des bildgebenden Sensors 3 verwendet. Ein beispielhaftes Abbild 11 der Parklücke 8' bzw. der Markierungen 7' ist in Fig. 2 schematisch dargestellt, wobei mit 12 ein Horizont bezeichnet ist. Das Abbild 11 entspricht hier einem durch die Kamera bereitgestellten Bild der Fahrzeugumgebung. Um die Markierungen 7' zu detektieren, kann aus dem Bild der Kamera ein so genanntes Gradientenbild bzw. Kantenbild erzeugt werden, anhand dessen dann die Markierungen 7' identifiziert werden.

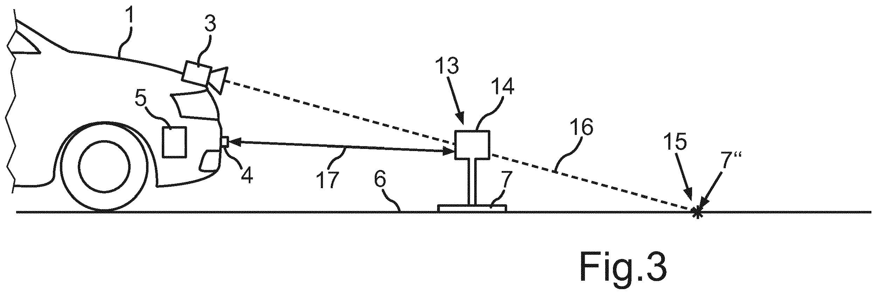

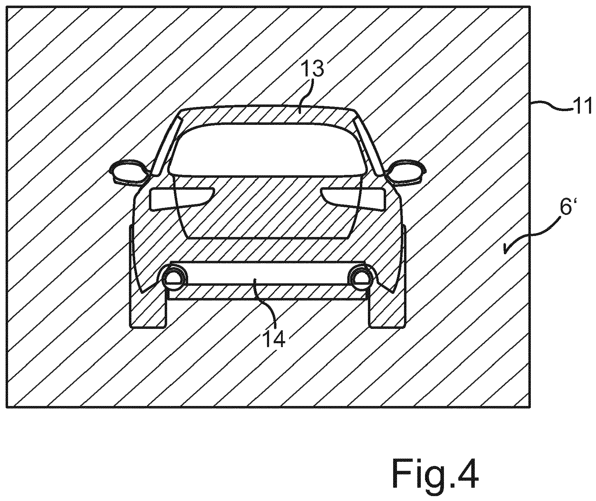

Befindet sich zwischen dem Kraftfahrzeug 1 und den Markierungen 7 kein weiteres Objekt, so können die Markierungen 7 anhand von Bilddaten des Sensors 3 grundsätzlich problemlos detektiert werden. Schwierigkeiten können sich im Stand der Technik dann ergeben, wenn - wie in Fig. 3 dargestellt - sich ein Objekt 13 auf dem Boden 6 befindet, beispielsweise im Bereich einer tatsächlichen Markierung 7. Handelt es sich bei dem Objekt 13 beispielsweise um ein dunkles Fahrzeug mit einer hellen, länglichen Chromleiste 14, so wird durch den Sensor 3 ein Abbild 11 bereitgestellt, wie es schematisch in Fig. 4 gezeigt ist. Abgebildet ist hier ein Objekt 13 in Form eines schwarzen Fahrzeugs mit einer länglichen Chromleiste 14, wobei das Objekt 13 auf einem dunklen Boden 6' steht. Ohne eine zusätzliche Plausibilisierung würde die Auswerteeinrichtung 5 die Chromleiste 14 als eine Bodenmarkierung interpretieren.

Um solche fehlerhaften Interpretationen zu verhindern, wird durch die Auswerteeinrichtung 5 eine zusätzliche Plausibilisierung der anhand des Abbilds 11 detektierten potentiellen Markierungen vorgenommen. Mit erneutem Bezug auf Fig. 3 wird durch den bildgebenden Sensor 3 ein Abbild bereitgestellt, in welchem das Objekt 13 - beispielsweise mit einer genannten Chromleiste 14 bzw. einer anderen länglichen Markierung - abgebildet ist. Diese Chromleiste 14 wird durch die Auswerteeinrichtung 5 als eine potentielle Markierung 7" interpretiert, die sich in einer relativen Position bezüglich des Kraftfahrzeugs 1 befindet, die sich durch eine Bodenprojektion 15 entlang einer den Sensor 3 mit der Chromleiste 14 verbindenden Geraden 16 ergibt. Der bildgebende Sensor 3 kann nämlich lediglich ein zweidimensionales Abbild 11 der Umgebung bereitstellen, welches keine Tiefeninformationen enthält. Um diese potentielle Markierung 7" zu plausibilisieren bzw. zu bestätigen, wird nun eine Abstandsmessung mit dem Abstandssensor 4 durchgeführt, welcher einen Abstand 17 zum Objekt 13 misst. Die Auswerteeinrichtung 5 überprüft nun, ob der gemessene Abstand 17 geringer oder größer als ein Abstand der potentiellen Markierung 7" von dem Kraftfahrzeug 1 ist. Mit anderen Worten überprüft die Auswerteeinrichtung 5, ob sich vor der potentiellen Markierung 7" - d.h. zwischen dem Kraftfahrzeug 1 und der potentiellen Markierung 7" - ein Objekt 13 befindet oder nicht. Wird das Objekt 13 vor der potentiellen Markierung 7" detektiert, wird die potentielle Markierung 7" durch die Auswerteeinrichtung 5 als die Chromleiste 14 und somit als eine Markierung des Objekts 13 interpretiert. Wird hingegen kein Objekt 13 in dem Bereich zwischen dem Kraftfahrzeug 1 und der potentiellen Markierung 7" detektiert, wird die potentielle Markierung 7" als eine auf dem Boden 6 tatsächlich aufgebrachte Markierung 7 interpretiert, deren Position der Position der potentiellen Markierung 7" in Fig. 3 entspricht.

## Patentansprüche

1. Verfahren zum Detektieren einer auf einem Boden (6) aufgebrachten Markierung (7) durch eine Fahrerassistenzeinrichtung (2) eines Kraftfahrzeugs (1) durch:
- Bereitstellen eines zweidimensionalen Abbilds (11) mittels eines bildgebenden Sensors (3) der Fahrerassistenzeinrichtung (2),
- Identifizieren einer potentiellen Markierung (7") anhand des zweidimensionalen Abbilds (11),
- Durchführen einer Abstandsmessung mittels eines Abstandssensors (4) der Fahrerassistenzeinrichtung (2) und
- Bestimmen abhängig von einem Ergebnis (17) der Abstandsmessung, ob die potentielle Markierung (7") die auf dem Boden (6) aufgebrachte Markierung (7) oder eine Markierung (14) eines auf dem Boden (6) stehenden Objekts (13) ist, **dadurch gekennzeichnet, dass** die auf dem Boden (6) aufgebrachte Markierung eine Längsmarkierung ist, wobei durch die Fahrerassistenzeinrichtung (2) eine Position der potentiellen Markierung (7") relativ zum Kraftfahrzeug (1) anhand des zweidimensionalen Abbilds (11) durch eine Bodenprojektion (15) der potentiellen Markierung (7") auf den Boden (6) bestimmt und zur Plausibilisierung der potentiellen Markierung (7") mit dem Ergebnis (17) der Abstandsmessung verglichen wird.

2. Verfahren nach Anspruch 1,
**dadurch gekennzeichnet, dass**
falls bei der Abstandsmessung ein Abstand (17) gemessen wird, welcher kleiner als ein Abstand der potentiellen Markierung (7") von dem Kraftfahrzeug (1) ist, die potentielle Markierung (7") als die Markierung (14) des Objekts (13) interpretiert wird.

3. Verfahren nach Anspruch 1 oder 2,
**dadurch gekennzeichnet, dass**
falls bei der Abstandsmessung kein Objekt (13) detektiert wird oder ein Abstand (17) gemessen wird, welcher größer als ein Abstand der potentiellen Markierung (7") von dem Kraftfahrzeug (1) ist, die potentielle Markierung (7") als die auf dem Boden (6) aufgebrachte Markierung (7) interpretiert wird.

4. Verfahren nach einem der vorhergehenden Ansprüche,
**dadurch gekennzeichnet, dass**
das zweidimensionale Abbild (11) mittels einer Kamera und/oder mittels eines Laserscanners als bildgebender Sensor (3) bereitgestellt wird.

5. Verfahren nach einem der vorhergehenden Ansprüche,
**dadurch gekennzeichnet, dass**
die Abstandsmessung mittels eines Ultraschallsensors und/oder mittels eines Laserscanners und/oder mittels eines Radarsensors und/oder mittels einer dreidimensionale Bilddaten bereitstellenden Kamera als Abstandssensor (4) durchgeführt wird.

6. Verfahren nach einem der vorhergehenden Ansprüche,
**dadurch gekennzeichnet, dass**
zur Detektion einer Parklücke (8) und/oder zur Festlegung einer Zielposition des Kraftfahrzeugs (1) in einer Parklücke (8) eine Parklückenmarkierung als die auf dem Boden (6) aufgebrachte Markierung (7) mittels der Fahrerassistenzeinrichtung (2) detektiert wird.

7. Verfahren nach einem der vorhergehenden Ansprüche,
**dadurch gekennzeichnet, dass**
zur Erkennung einer Fahrspur eine Straßenlängsmarkierung als die auf dem Boden (6) aufgebrachte Markierung (7) mittels der Fahrerassistenzeinrichtung (2) detektiert wird.

8. Fahrerassistenzeinrichtung (2) für ein Kraftfahrzeug (1), zum Detektieren einer auf einem Boden (6) aufgebrachten Markierung (7), mit:
- einem bildgebenden Sensor (3) zum Bereitstellen eines zweidimensionalen Abbilds (11),
- einer Auswerteeinrichtung (5) zum Identifizieren einer potentiellen Markierung (7") anhand des zweidimensionalen Abbilds (11) und
- einem Abstandssensor (4) zum Durchführen einer Abstandsmessung,
**dadurch gekennzeichnet, dass**
die Auswerteeinrichtung (5) dazu ausgelegt ist, abhängig von einem Ergebnis (17) der Abstandsmessung zu bestimmen, ob die potentielle Markierung (7") die auf dem Boden (6) aufgebrachte Markierung (7) oder eine Markierung (14) eines auf dem Boden (6) stehenden Objekts (13) ist, wobei die Fahrerassistenzeinrichtung (2) dazu ausgelegt ist, eine Position der potentiellen Markierung (7") relativ zum Kraftfahrzeug (1) anhand des zweidimensionalen Abbilds (11) durch eine Bodenprojektion (15) der potentiellen Markierung (7") auf den Boden (6) zu bestimmen und zur Plausibilisierung der potentiellen Markierung (7") mit dem Ergebnis (17) der Abstandsmessung zu verglichen.

9. Kraftfahrzeug (1) mit einer Fahrerassistenzeinrichtung (2) nach Anspruch 8.

## Claims

1. Method for detecting a marking (7) made on a ground (6) by a driver assistance device (2) of a motor vehicle (1) by:
- providing a two-dimensional image (11) by means of an imaging sensor (3) of the driver assistance device (2),
- identifying a potential marking (7") on the basis of the two-dimensional image (11),
- performing a distance measurement by means of a distance sensor (4) of the driver assistance device (2), and
- taking a result (17) of the distance measurement as a basis for determining whether the potential marking (7") is the marking (7) made on the ground (6) or a marking (14) on an object (13) that is on the ground (6),
**characterized in that** the marking made on the ground (6) is a longitudinal marking, wherein the driver assistance device (2) determines a position of the potential marking (7") relative to the motor vehicle (1) on the basis of the two-dimensional image (11) by means of a ground projection (15) of the potential marking (7") onto the ground (6) and plausibilizes the potential marking (7") by comparing said position with the result (17) of the distance measurement.

2. Method according to Claim 1,
**characterized in that**
if the distance measurement involves a distance (17) being measured that is shorter than a distance of the potential marking (7") from the motor vehicle (1), then the potential marking (7") is interpreted as the marking (14) on the object (13).

3. Method according to Claim 1 or 2,
**characterized in that**
if the distance measurement involves no object (13) being detected or a distance (17) being measured that is longer than a distance of the potential marking (7") from the motor vehicle (1), then the potential marking (7") is interpreted as the marking (7) made on the ground (6).

4. Method according to one of the preceding claims,
**characterized in that**
the two-dimensional image (11) is provided by means of a camera and/or by means of a laser scanner as an imaging sensor (3).

5. Method according to one of the preceding claims,
**characterized in that**
the distance measurement is performed by means of an ultrasonic sensor and/or by means of a laser scanner and/or by means of a radar sensor and/or by means of a camera providing three-dimensional image data as a distance sensor (4).

6. Method according to one of the preceding claims,
**characterized in that**
a parking space (8) is detected and/or a target position for the motor vehicle (1) in a parking space (8) is stipulated by using the driver assistance device (2) to detect a parking space marking as the marking (7) made on the ground (6).

7. Method according to one of the preceding claims,
**characterized in that**
a lane is recognized by using the driver assistance device (2) to detect a longitudinal road marking as the marking (7) made on the ground (6).

8. Driver assistance device (2) for a motor vehicle (1), for detecting a marking (7) made on a ground (6), having:
- an imaging sensor (3) for providing a two-dimensional image (11),
- an evaluation device (5) for identifying a potential marking (7") on the basis of the two-dimensional image (11), and
- a distance sensor (4) for performing a distance measurement,
**characterized in that**
the evaluation device (5) is designed to take a result (17) of the distance measurement as a basis for determining whether the potential marking (7") is the marking (7) made on the ground (6) or a marking (14) on an object (13) that is on the ground (6), wherein the driver assistance device (2) is designed to determine a position of the potential marking (7") relative to the motor vehicle (1) on the basis of the two-dimensional image (11) by means of a ground projection (15) of the potential marking (7") onto the ground (6) and to plausibilize the potential marking (7") by comparing said position with the result (17) of the distance measurement.

9. Motor vehicle (1) having a driver assistance device (2) according to Claim 8.

## Revendications

1. Procédé de détection d'un marquage (7) appliqué sur un sol (6) par un dispositif d'assistance au conducteur (2) d'un véhicule automobile (1) par :
- la fourniture d'une représentation (11) bidimensionnelle au moyen d'un capteur d'imagerie (3) du dispositif d'assistance au conducteur (2),
- l'identification d'un marquage potentiel (7") à l'aide de la représentation (11) bidimensionnelle,
- la réalisation d'une mesure de distance au moyen d'un capteur de distance (4) du dispositif d'assistance au conducteur (2), et
- la détermination, en fonction d'un résultat (17) de la mesure de distance, si le marquage potentiel (7") est le marquage (7) appliqué sur le sol (6) ou un marquage (14) d'un objet (13) se trouvant sur le sol (6), **caractérisé en ce que** le marquage appliqué sur le sol (6) est un marquage longitudinal, une position du marquage potentiel (7") par rapport au véhicule automobile (1) étant déterminée par le dispositif d'assistance au conducteur (2) à l'aide de la représentation (11) bidimensionnelle par une projection au sol (15) du marquage potentiel (7") sur le sol (6) et étant comparée au résultat (17) de la mesure de distance en vue de vérifier la plausibilité du marquage potentiel (7").

2. Procédé selon la revendication 1, **caractérisé en ce que** dans le cas où, lors de la mesure de distance, une distance (17) est mesurée qui est inférieure à une distance entre le marquage potentiel (7") et le véhicule automobile (1), le marquage potentiel (7") est interprété comme étant le marquage (14) de l'objet (13).

3. Procédé selon la revendication 1 ou 2, **caractérisé en ce que** dans le cas où aucun objet (13) n'est détecté lors de la mesure de distance, ou une distance (17) est mesurée qui est supérieure à une distance entre le marquage potentiel (7") et le véhicule automobile (1), le marquage potentiel (7") est interprété comme étant le marquage (7) appliqué sur le sol (6).

4. Procédé selon l'une des revendications précédentes, **caractérisé en ce que** la représentation (11) bidimensionnelle est fournie au moyen d'une caméra et/ou au moyen d'un système de balayage à laser faisant office de capteur d'imagerie (3).

5. Procédé selon l'une des revendications précédentes, **caractérisé en ce que** la mesure de distance est réalisée au moyen d'un détecteur à ultrasons et/ou au moyen d'un système de balayage à laser et/ou au moyen d'un capteur radar et/ou au moyen d'une caméra fournissant des données d'image tridimensionnelles en tant que capteur de distance (4).

6. Procédé selon l'une des revendications précédentes, **caractérisé en ce qu'**en vue de la détection d'un emplacement de stationnement (8) et/ou en vue de spécifier une position cible du véhicule automobile (1) dans un emplacement de stationnement (8), un marquage d'emplacement de stationnement est détecté au moyen du dispositif d'assistance au conducteur (2) en tant que marquage (7) appliqué sur le sol (6).

7. Procédé selon l'une des revendications précédentes, **caractérisé en ce qu'**en vue de la reconnaissance d'une voie de circulation, un marquage longitudinal de route est détecté au moyen du dispositif d'assistance au conducteur (2) en tant que marquage (7) appliqué sur le sol (6) .

8. Dispositif d'assistance au conducteur (2) pour un véhicule automobile (1), destiné à détecter un marquage (7) appliqué sur un sol (6), comprenant :
- un capteur d'imagerie (3) destiné à fournir une représentation (11) bidimensionnelle,
- un dispositif d'interprétation (5) destiné à identifier un marquage potentiel (7") à l'aide de la représentation (11) bidimensionnelle et
- un capteur de distance (4) destiné à réaliser une mesure de distance,
**caractérisé en ce que**
le dispositif d'interprétation (5) est conçu pour déterminer, en fonction d'un résultat (17) de la mesure de distance, si le marquage potentiel (7") est le marquage (7) appliqué sur le sol (6) ou un marquage (14) d'un objet (13) se trouvant sur le sol (6), le dispositif d'assistance au conducteur (2) étant conçu pour déterminer une position du marquage potentiel (7") par rapport au véhicule automobile (1) à l'aide de la représentation (11) bidimensionnelle par une projection au sol (15) du marquage potentiel (7") sur le sol (6) et la comparer au résultat (17) de la mesure de distance en vue de vérifier la plausibilité du marquage potentiel (7").

9. Véhicule automobile (1) comprenant un dispositif d'assistance au conducteur (2) selon la revendication 8.
